# EUROPÄISCHE PATENTSCHRIFT

(11) **EP 1 143 591 B1**
(45) Veröffentlichungstag und Bekanntmachung des Hinweises auf die Patenterteilung: **21.09.2005**
(21) Anmeldenummer: 01104015.1
(22) Anmeldetag: 20.02.2001
(51) Int. Cl.: H02J 1/10

(54) **Verfahren und Vorrichtung zur Regelung des Parallelbetriebes von Gleichspannungswandlern**
Method and device for controlling parallel operation of DC-DC converters
Procédé et dispositif pour commander le fonctionnement en parallèle de convertisseurs de courant continu à courant continu

(30) Priorität: 30.03.2000 DE 10015917
(43) Veröffentlichungstag der Anmeldung: 10.10.2001
(73) Patentinhaber: ROBERT BOSCH GMBH, 70442 Stuttgart (DE)
(72) Erfinder: Gronbach, Roman, 70825 Korntal (DE)

(56) Entgegenhaltungen:
- WO-A-99/41816
- WO-A-99/41817
- US-A- 5 682 303
- US-A- 5 995 389
- PATENT ABSTRACTS OF JAPAN vol. 1999, no. 10, 31. August 1999 (1999-08-31) & JP 11 127573 A (MITSUBISHI ELECTRIC CORP), 11. Mai 1999 (1999-05-11)

## Beschreibung

### Stand der Technik

Die Erfindung betrifft ein Verfahren zur Regelung des Parallelbetriebs mehrerer Gleichspannungswandler mit den im Oberbegriff des Anspruchs 1 angegebenen Merkmalen sowie eine Vorrichtung zur Regelung des Parallelbetriebs mehrerer Gleichspannungswandler mit den im Oberbegriff des Anspruchs 7 angegebenen Merkmalen.

Zur Leistungserhöhung von Gleichspannungswandlern können mehrere Gleichspannungswandler parallel geschaltet und im Sinne eines Master-/Slave-Betriebes eingesetzt werden. Dabei übernimmt der als Master dienende Gleichspannungswandler die Spannungsregelung im ausgangsseitigen Gesamtsystem. Der oder die untergeordneten Wandler tragen als vom Master gesteuerte Stromquellen zur Erhöhung der Ausgangsleistung bei. In herkömmlichen Systemen wird zur Übertragung der Steuerbefehle zwischen Master und Slave eine zusätzliche Kabelverbindung benötigt, über welche analoge, zeitkontinuierliche Stromsollwerte an den oder die Slave-Wandler übermittelt werden.

Aus der DE 195 46 495 A1 sind bereits eine Schaltungsanordnung und ein Verfahren für eine gleichmäßige Aufteilung der elektrischen Leistung bekannt. Dabei werden mehrere Stromrichter als Netzteile mit Gleichrichtern zur Versorgung eines gemeinsamen Gleichstromverbrauchers parallel betrieben. Die Netzteile sind über ein Bussystem miteinander verbunden. Im Betrieb der Anlage erfolgt automatisch eine gleichmäßige Stromaufteilung.

Weiterhin sind aus der DE 198 05 926 A1 eine Vorrichtung und ein Verfahren zum gesteuerten Parallelbetrieb von Gleichspannungswandlern, insbesondere in einem Mehrspannungsbordnetz eines Fahrzeugs, bekannt. Dabei arbeitet einer der Wandler im aktiven Bereich, die anderen entweder im Vollastbetrieb oder im Leerlauf.

Ferner ist aus der Patentanmeldung DE 199 33 039 ein Gleichspannungswandler bekannt, dessen Regelsignal unter Verwendung eines Spannungsreglers und eines Stromreglers erzeugt wird. Zwischen dem Spannungsregler und dem Stromregler ist ein Begrenzer vorgesehen, der zur Begrenzung des Ausgangssignals des Spannungsreglers dient. Durch Vorgabe geeigneter Werte für einen Spannungssollwert und ein Grenzwertsignal für den Stromsollwert sind verschiedene Betriebsarten realisierbar. Dazu gehören eine Betriebsart mit geregelter Ausgangsspannung und eine Betriebsart mit geregeltem Ausgangsstrom. Letztere ist insbesondere für einen Parallelbetrieb mehrerer Gleichspannungswandler geeignet, wobei ein übergeordneter Gleichspannungswandler die Spannungsregelung übernimmt und den weiteren Wandlern lediglich den Sollwert für den einzustellenden Ausgangsstrom zuteilt. Die untergeordneten Wandler arbeiten somit als Stromquelle.

Aus der DE 196 32 891 A1 ist eine wirkungsgradoptimierte Steuerung eines Generators unter Verwendung eines abgespeicherten Kennfeldes bekannt, welches einen Zusammenhang zwischen dem Strom, dem Wirkungsgrad und der Generatordrehzahl beschreibt.

### Vorteile der Erfindung

Die Vorteile eines erfindungsgemäßen Verfahrens und einer erfindungsgemäßen Vorrichtung bestehen insbesondere darin, daß durch die beanspruchte Regelstrategie die Stromverteilung zwischen den Wandlern im Hinblick auf einen größtmöglichen Wirkungsgrad des Gesamtsystems optimiert ist. Liegt der gesamte Strombedarf der Verbraucherseite unterhalb des vorgegebenen Stromgrenzwertes, so ist die Bereitstellung dieses gesamten Strombedarfs durch einen einzigen Gleichspannungswandler günstiger. Überschreitet der Gesamtstrombedarf den vorgegebenen Stromgrenzwert, dann erreicht man durch eine insbesondere symmetrische Aufteilung des Ausgangsstroms auf alle vorhandenen Gleichspannungswandler den größtmöglichen Wirkungsgrad.

Vorzugsweise dient der Gleichspannungswandler mit Spannungsregelung zur Ausregelung von kurzzeitigen Laständerungen. Dies ist insbesondere dann von Vorteil, wenn zwischen den Gleichspannungswandlern eine digitale, zeitdiskrete Informationsübertragung erfolgt. Eine solche ist verzögerungsbehaftet, so daß die untergeordneten, als Stromquelle arbeitenden Gleichspannungswandler nicht sofort zur Verfügung stehen. Dies kann zu Regeldifferenzen führen. Derartige Regeldifferenzen können durch den Master-Funktion ausübenden Gleichspannungswandler schnell ausgeregelt werden.

### Zeichnung

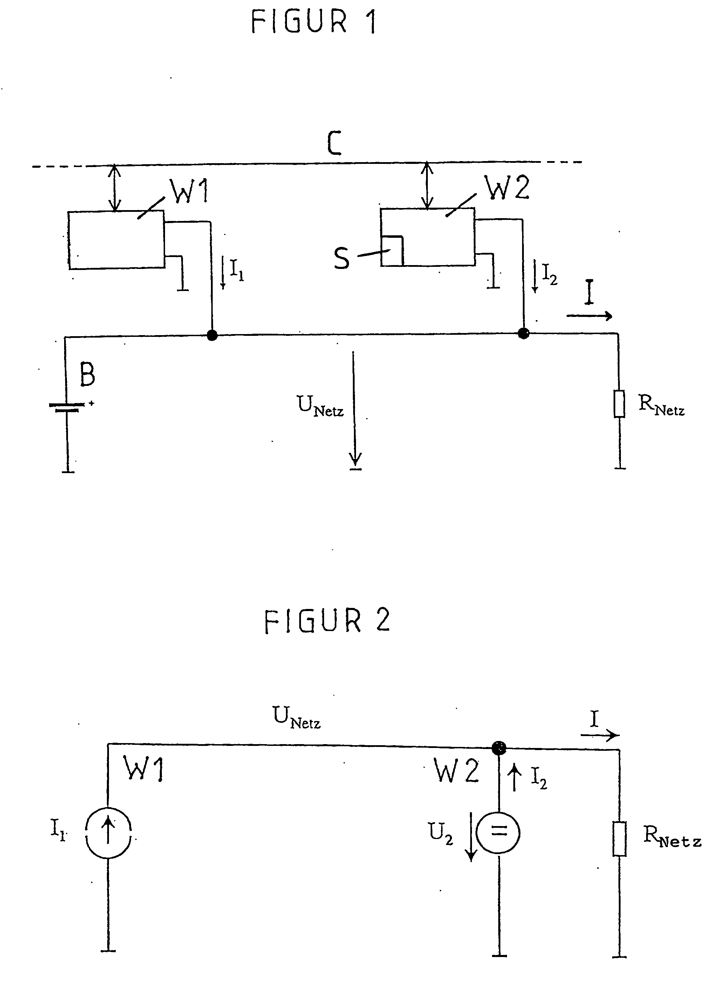

Nachfolgend wird die Erfindung anhand der Figuren beispielhaft näher erläutert. Die Figur 1 zeigt ein Blockschaltbild eines Kraftfahrzeug-Bordnetzes, in welchem zur Versorgung einer Last eine Parallelschaltung zweier Gleichspannungswandler vorgesehen ist. Die Figur 2 zeigt ein Ersatzschaltbild zweier Wandler im Parallelbetrieb.

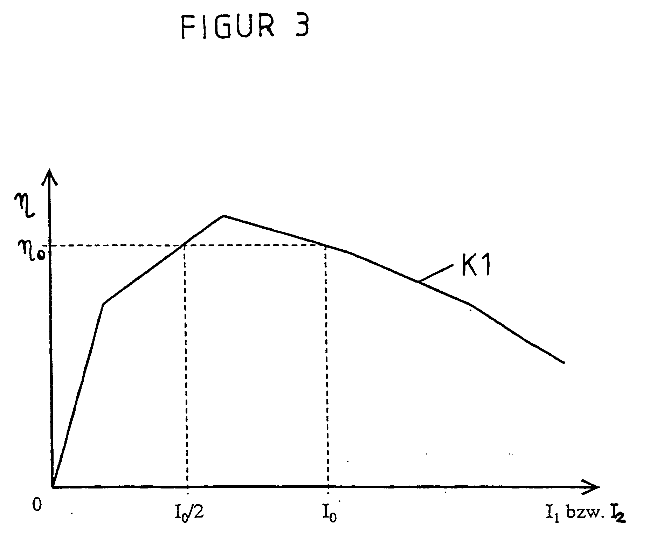

Die Figur 3 zeigt ein Diagramm zur Veranschaulichung der beanspruchten Regelstrategie.

### Beschreibung

Die Figur 1 zeigt ein Blockschaltbild eines Kraftfahrzeug-Bordnetzes, in welchem zur Versorgung einer Last eine Parallelschaltung zweier Gleichspannungswandler vorgesehen ist. Die beiden Gleichspannungswandler W1 und W2 sind zum Zwecke eines Informationsaustausches über einen CAN-Bus C miteinander verbunden. Weiterhin sind die Ausgänge beider Gleichspannungswandler miteinander verbunden. Die Aufgabe der Gleichspannungswandler W1 und W2, die an eine nicht gezeichnete Energiequelle angeschlossen sind, besteht darin, einen über eine Batterie B gepufferten Verbraucher R_{Netz} mit Energie zu versorgen. Am Verbraucher R_{Netz} ist eine Spannung U_{Netz} abgreifbar.

Um das Auftreten von Koppelschwingungen zu vermeiden, übt der Wandler W2 Master-Funktion aus und arbeitet mit Spannungsregelung. Der Wandler W1, der Slave-Funktion hat, dient lediglich als Stromquelle. Die Information über den von ihm zu liefernden Stromsollwert I₁ wird dem Wandler W1 über den CAN-Bus C vom Wandler W2, der Master-Funktion hat, zugeführt. Der vom Wandler W2 zur Deckung des vorliegenden Strombedarfs zur Verfügung gestellte Strom ist mit I₂ bezeichnet. Die Berechnung des Stromsollwertes für den untergeordneten Wandler W1 erfolgt aus den mittels einer Meßvorrichtung gemessenen Ausgangsströmen I₁ und I₂ der Wandler. Die Übermittlung der gemessenen Ausgangsströme an den Master-Funktion ausübenden Gleichspannungswandler W2 erfolgt über den CAN-Bus C.

Die gezeigte Vorrichtung arbeitet wie folgt:

Ist der Gesamtstrombedarf des Verbrauchers R_{Netz} kleiner als ein vorgegebener Stromgrenzwert, dann deckt der Wandler W2 den gesamten Strombedarf ab. Der Wandler W1 leistet in diesem Fall keinen Beitrag zur Stromversorgung des Verbrauchers.

Ist der Gesamtstrombedarf des Verbrauchers R_{Netz} größer als der vorgegebene Stromgrenzwert, dann erfolgt die Dekkung des Gesamtstrombedarfs durch eine Aufteilung auf beide Gleichspannungswandler W1 und W2. Vorzugsweise erfolgt eine symmetrische Aufteilung des Stromes auf die beiden Gleichspannungswandler.

Sind parallel zum Wandler W1 weitere Slave-Gleichspannungswandler vorgesehen, dann wird der gesamte Strombedarf von allen Gleichspannungswandlern gedeckt, wobei alle Wandler gleiche Stromanteile liefern. Die Berechnung dieser Stromanteile erfolgt im als Master dienenden Wandler W2.

Dieser weist einen nichtflüchtigen Speicher S auf, in welchem der vorgegebene Stromgrenzwert I₀ abgespeichert ist. Dieser vorgegebene Stromgrenzwert wurde bereits im voraus ermittelt und bleibt während des Betriebes unverändert.

Die Ermittlung des Stromgrenzwertes I₀ und die beanspruchte Regelstrategie werden nachfolgend anhand des in der Figur 3 gezeigten Diagrammes näher erläutert. Dabei wird davon ausgegangen, daß die Vorrichtung - wie es oben im Zusammenhang mit der Figur 1 erläutert wurde - insgesamt zwei Gleichspannungswandler W1 und W2 aufweist, die von der gleichen Bauart sind.

Längs der Abszisse des in der Figur 3 gezeigten Diagrammes ist der Ausgangsstrom I₁ bzw. I₂ eines Gleichsspannungswandlers aufgetragen, längs der Ordinate der Wir-Wirkungsgrad η des Gleichspannungswandlers. Die in der Figur 3 dargestellte Kurve K1 entspricht dem Verlauf des Wir-Wirkungsgrades η in Abhängigkeit vom jeweiligen Ausgangsstrom des Gleichspannungswandlers.

Dieser Verlauf des Wirkungsgrades wird im voraus dadurch ermittelt, daß für eine Vielzahl von Ausgangsstromwerten eines Wandlers das jeweils zugehörige Verhältnis von Ausgangsleistung zu Eingangsleistung gemessen wird, welches dem Wirkungsgrad entspricht.

Auf dieser Kurve K1 wird dann ein Stromwert I₀ gesucht, bei welchem der zugehörige Wirkungsgrad η₀ denselben Wert aufweist wie beim Stromwert I₀/2. Dieser Wirkungsgrad η₀ ist derjenige Wirkungsgrad, bei welchem eine Bereitstellung des gesamten Strombedarfs durch einen einzigen Wandler einer Bereitstellung des gesamten Strombedarfs durch eine Aufteilung auf beide vorhandenen Wandler gleichkommt. Ist der gesamte Strombedarf kleiner als der Stromwert I₀, dann ist es im Hinblick auf den Wirkungsgrad günstiger, den gesamten Strombedarf durch einen einzigen Wandler zu decken. Ist der gesamte Strombedarf hingegen größer als der Stromwert I₀, dann ist es im Hinblick auf den Gesamtwirkungsgrad günstiger, eine - insbesondere gleichmäßige - Stromaufteilung auf beide vorhandene Wandler vorzunehmen.

Die Anzahl der insgesamt vorhandenen Wandler kann auch größer sein als zwei. Beispielsweise können insgesamt drei Gleichspannungswandler vorgesehen sein. In diesem Falle würde dann auf der Kurve K1 nach einem Stromgrenzwert I₀' gesucht, bei welchem der zugehörige Wirkungsgrad derselbe ist wie beim Stromwert I₀'/3.

Der im voraus ermittelte Stromgrenzwert wird - wie bereits oben erwähnt - in einem nichtflüchtigen Speicher S abgespeichert und steht im Betrieb der Vorrichtung zu einem mittels eines im Wandler W2 angeordneten Vergleichers durchgeführten Vergleich mit dem momentanen Strombedarf des Verbrauchers, d.h. mit dem Gesamtstrombedarf, zur Verfügung. Dieser Gesamtstrombedarf wird durch eine Messung der Ausgangsströme I₁ und I₂ der Gleichspannungswandler und deren Addition in einem Addierer ermittelt. In Abhängigkeit vom Vergleichsergebnis erfolgt eine Ermittlung des von jedem der Wandler zu liefernden Ausgangsstromes und eine Übermittlung von zugehörigen Informationen zu den einzelnen Wandlern.

Diese Informationsübermittlung zwischen den Wandlern erfolgt über den CAN-Bus C, welcher zwischen den Wandlern angeordnet ist.

Die Figur 2 zeigt ein Ersatzschaltbild zweier Gleichspannungswandler W1 und W2 im Parallelbetrieb. Der Wandler W2 arbeitet als Spannungsquelle, der Wandler W1 als Stromquelle. Die Deckung des vorliegenden Gesamtstrombedarfs des Verbrauchers R_{Netz} erfolgt gemäß der oben beschriebenen Regelstrategie.

## Patentansprüche

1. Verfahren zur Regelung des Parallelbetriebs mehrerer Gleichspannungswandler, bei welchem einer der Gleichspannungswandler Master-Funktion und mindestens ein anderer Gleichspannungswandler Slave-Funktion ausübt, wobei der Master-Funktion ausübende Gleichspannungswandler mit Spannungsregelung und der mindestens eine andere Gleichspannungswandler als Stromquelle arbeitet, wobei
der Gesamtstrombedarf ermittelt und mit einem vorgegebenem Stromgrenzwert verglichen wird, und daß
beim Vorliegen eines Gesamtstrombedarfs, der kleiner ist als der vorgegebene Stromgrenzwert, der Gesamtstrombedarf durch einen einzigen der Gleichspannungswandler gedeckt wird und
beim Vorliegen eines Gesamtstrombedarfs, der größer ist als der vorgegebene Stromgrenzwert, die Deckung des Gesamtstrombedarfs auf die Gleichspannungswandler aufgeteilt wird, **dadurch gekennzeichnet, daß**>
der vorgegebene Stromgrenzwert einem Gesamtstrombedarf entspricht, dessen Bereitstellung durch einen einzigen Gleichspannungswandler denselben Wirkungsgrad aufweist wie dessen Bereitstellung durch eine Aufteilung auf die mehreren Gleichspannungswandler.

2. Verfahren nach Anspruch 1, **dadurch gekennzeichnet, daß** beim Vorliegen eines Gesamtstrombedarfs, der größer ist als der vorgegebene Stromgrenzwert, die Deckung des Gesamtstrombedarfs durch die Gleichspannungswandler zu gleichen Teilen erfolgt.

3. Verfahren nach einem der vorhergehenden Ansprüche, **dadurch gekennzeichnet, daß** der Gleichspannungswandler mit Spannungsregelung zur Ausregelung von kurzzeitigen Laständerungen dient.

4. Verfahren nach einem der vorhergehenden Ansprüche, **dadurch gekennzeichnet, daß** die Kommunikation zwischen dem Master-Funktion ausübenden Gleichspannungswandler und den als Stromquellen arbeitenden Gleichspannungswandlern über einen Bus erfolgt.

5. Verfahren nach Anspruch 4, **dadurch gekennzeichnet, daß** der Bus ein CAN-Bus ist.

6. Verfahren nach einem der vorhergehenden Ansprüche, **dadurch gekennzeichnet, daß** zur Ermittlung des Gesamtstrombedarfs die Ausgangsströme der Gleichspannungswandler gemessen und addiert werden.

7. Vorrichtung zur Regelung des Parallelbetriebs mehrerer Gleichspannungswandler, mit
- einem ersten Master-Funktion ausübenden Gleichspannungswandler (W2), welcher mit Spannungsregelung arbeitet,
- mindestens einem weiteren, Slave-Funktion ausübenden Gleichspannungswandler (W1), welcher parallel zu dem Master-Funktion ausübenden Gleichspannungswandler angeordnet ist und als Stromquelle arbeitet, wobei
- die Ausgänge der Gleichspannungswandler (W1,W2) miteinander und mit einer Last verbunden sind,
**dadurch gekennzeichnet, daß**
sie eine Vorrichtung zur Ermittlung des Gesamtstrombedarfs und einen Vergleicher aufweist, der zum Vergleich des Gesamtstrombedarfs mit einem vorgegebenen Stromgrenzwert dient, und daß
beim Vorliegen eines Gesamtstrombedarfs, der kleiner ist als ein vorgegebener Stromgrenzwert, ein einziger der Gleichspannungswandler (W2) zur Deckung des Gesamtstrombedarfs dient und
beim Vorliegen eines Gesamtstrombedarfs, der größer ist als der vorgegebene Stromgrenzwert, die mehreren Gleichspannungswandler (W1,W2) zur Deckung des Gesamtstrombedarfs dienen, wobei
der vorgegebene Stromgrenzwert einem Gesamtstrombedarf entspricht, dessen Bereitstellung durch einen einzigen der Gleichspannungswandler (W2) denselben Wirkungsgrad aufweist wie dessen Bereitstellung durch eine Aufteilung auf die mehreren Gleichspannungswandler (W1,W2).

8. Vorrichtung nach Anspruch 7, **dadurch gekennzeichnet, daß** beim Vorliegen eines Gesamtstrombedarfs, der größer ist als der vorgegebene Stromgrenzwert, die mehreren Gleichspannungswandler (W1,W2) zu gleichen Teilen zur Deckung des Gesamtstrombedarfs dienen.

9. Vorrichtung nach Anspruch 7 oder 8, **dadurch gekennzeichnet, daß** der Gleichspannungswandler (W2) mit Spannungsregelung zur Ausregelung von kurzzeitigen Laständerungen dient.

10. Vorrichtung nach einem der Ansprüche 7-9, **dadurch gekennzeichnet, daß** sie einen zwischen den Gleichspannungswandlern angeordneten Bus (C) aufweist, über welchen die Kommunikation zwischen dem Master-Funktion ausübenden Gleichspannungswandler (W2) und den als Stromquellen arbeitenden Gleichspannungswandlern (W1) erfolgt.

11. Vorrichtung nach Anspruch 10, **dadurch gekennzeichnet, daß** der Bus (C) ein CAN-Bus ist.

12. Vorrichtung nach einem der Ansprüche 7-11, **dadurch gekennzeichnet, daß** sie einen Speicher (S) aufweist, der zur Abspeicherung des Stromgrenzwertes dient.

13. Vorrichtung nach Anspruch 12, **dadurch gekennzeichnet, daß** der Speicher (S) im Gleichspannungswandler mit Spannungsregelung (W2) angeordnet ist.

## Claims

1. Method for controlling the parallel operation of a plurality of DC-DC converters in which one of the DC-DC converters carries out a master function and at least one other DC-DC converter carries out a slave function, with the DC-DC converter which carries out the master function operating with voltage control and the at least one other DC-DC converter operating as a current source, wherein the overall power demand is determined and is compared with a predefined current limiting value, and in that when an overall power demand which is smaller than the predefined current limiting value is present the overall power demand is covered by one of the DC-DC voltage converters and when an overall power demand which is greater than the predefined current limiting value is present, the coverage of the overall power demand is divided between the DC-DC converters, **characterized in that** the predefined current limiting value corresponds to an overall power demand whose provision by a single DC-DC converter has the same efficiency level as when it is provided by division between the plurality of DC-DC converters.

2. Method according to Claim 1, **characterized in that** where an overall power demand which is greater than the predefined current limiting value is present, the overall power demand is covered by the DC-DC converters in equal proportions.

3. Method according to one of the preceding claims, **characterized in that** the DC-DC converter with voltage control is used to compensate brief changes in load.

4. Method according to one of the preceding claims, **characterized in that** the communication between the DC-DC converter which carries out the master function and the DC-DC converters which operate as power sources is carried out via a bus.

5. Method according to Claim 4, **characterized in that** the bus is a CAN bus.

6. Method according to one of the preceding claims, **characterized in that** in order to determine the overall power demand the output currents of the DC-DC converters are measured and added.

7. Device for controlling the parallel operation of a plurality of DC-DC converters, having
- a first DC-DC converter (W2) which carries out a master function and operates with voltage control,
- at least one other DC-DC converter (W1) which carries out a slave function and is arranged in parallel with the DC-DC converter, which carries out the master function, and operates as a power source, wherein
- the outputs of the DC-DC converters (W1, W2) are connected to one another and to a load,
**characterized in that** said device has a device for determining the overall power demand and a comparator which is used to compare the overall power demand with a predefined current limiting value, and **in that**
when an overall power demand which is lower than a predefined current limiting value is present, one of the DC-DC converters (W2) is used to cover the overall power demand, and
when an overall power demand which is greater than the predefined current limiting value is present, the plurality of DC-DC converters (W1, W2) are used to cover the overall power demand, wherein
the predefined current limiting value corresponds to an overall power demand whose provision by one DC-DC converter (W2) has the same efficiency level as when it is provided by division between the plurality of DC-DC converters (W1, W2).

8. Device according to Claim 7, **characterized in that** when an overall power demand which is greater than the predefined current limiting value is present, the plurality of DC-DC converters (W1, W2) are used in equal proportions to cover the overall power demand.

9. Device according to Claim 7 or 8, **characterized in that** the DC-DC converter (W2) with voltage control is used to compensate brief changes in load.

10. Device according to one of Claims 7-9, **characterized in that** said device has a bus (C) which is arranged between the DC-DC converters and via which the communication takes place between the DC-DC converter (W2) which carries out the master function and the DC-DC converters (W1) which operate as power sources.

11. Device according to Claim 10, **characterized in that** the bus (C) is a CAN bus.

12. Device according to one of Claims 7-11, **characterized in that** it has a memory (S) which is used to store the current limiting value.

13. Device according to Claim 12, **characterized in that** the memory (S) is arranged in the DC-DC converter with voltage control (W2).

## Revendications

1. Procédé pour commander le fonctionnement en parallèle de plusieurs convertisseurs continu-continu, dont l'un des convertisseurs continu-continu exerce la fonction de maître et au moins un autre convertisseur continu-continu la fonction d'esclave,
le convertisseur continu-continu exerçant la fonction de maître travaille en mode régulation de tension et au moins un autre convertisseur de tension comme source de courant,
le besoin en courant total, déterminé et comparé avec une valeur limite de courant prédéterminée, est couvert par un seul des convertisseurs continu-continu en présence d'un besoin en courant total inférieur à la valeur limite de courant prédéterminée, la couverture du besoin en courant total étant répartie sur les convertisseurs continu-continu en présence d'un besoin en courant total supérieur à la valeur limite de courant prédéterminée,
**caractérisé en ce que**
la valeur limite de courant prédéterminée correspond à un besoin en courant total dont la mise à disposition par un seul convertisseur continu-continu présente le même rendement que la mise à disposition de celui-ci par une répartition sur les différents convertisseurs continu-continu.

2. Procédé selon la revendication 1,
**caractérisé en ce que**
la couverture du besoin en courant total est assurée à parts égales par les convertisseurs continu-continu en présence d'un besoin en courant total supérieur à la valeur limite de courant prédéterminée.

3. Procédé selon l'une quelconque des revendications précédentes,
**caractérisé en ce que**
le convertisseur continu-continu en mode régulation de tension sert à réguler des variations de charge de courte durée.

4. Procédé selon l'une quelconque des revendications précédentes,
**caractérisé en ce que**
la communication entre le convertisseur continu-continu exerçant la fonction de maître et les convertisseurs continu-continu travaillant comme sources de courant s'effectue par l'intermédiaire d'un bus.

5. Procédé selon la revendication 4,
**caractérisé en ce que**
le bus est un bus CAN.

6. Procédé selon l'une quelconque des revendications précédentes,
**caractérisé en ce que**
pour déterminer le besoin en courant total les courants de sortie des convertisseurs continu-continu sont mesurés et additionnés.

7. Dispositif pour commander le fonctionnement en parallèle de plusieurs convertisseurs continu-continu, comprenant :
- un premier convertisseur continu-continu (W2) exerçant la fonction de maître travaillant en mode régulation de tension,
- au moins un autre convertisseur continu-continu (W1) exerçant la fonction d'esclave, qui est disposé parallèlement au convertisseur continu-continu exerçant la fonction de maître et travaille comme source de courant,
- les sorties des convertisseurs continu-continu (W1, W2) étant reliées les unes aux autres et à une charge,
**caractérisé en ce qu'**
il présente un dispositif pour déterminer le besoin en courant total et un comparateur servant à la comparaison du besoin en courant total avec une valeur limite de courant prédéterminée, et
le besoin en courant total est couvert par un seul des convertisseurs continu-continu (W2) en présence d'un besoin en courant total inférieur à une valeur limite de courant prédéterminée,
les différents convertisseurs continu-continu (W1, W2) servant à la couverture du besoin en courant total en présence d'un besoin en courant total supérieur à la valeur limite de courant prédéterminée, et
la valeur limite de courant prédéterminée correspondant à un besoin en courant total dont la mise à disposition par un seul convertisseur continu-continu (W2) présente le même rendement que la mise à disposition de celui-ci par une répartition sur les différents convertisseurs continu-continu (W1, W2).

8. Dispositif selon la revendication 7,
**caractérisé en ce que**
les différents convertisseurs continu-continu (W1, W2) servent à parts égales à la couverture du besoin en courant total en présence d'un besoin en courant total supérieur à la valeur limite de courant prédéterminée.

9. Dispositif selon la revendication 7 ou 8,
**caractérisé en ce que**
le convertisseur continu-continu (W2) en mode régulation de tension sert à réguler des variations de charge de courte durée.

10. Dispositif selon l'une quelconque des revendications 7 à 9,
**caractérisé en ce qu'**
il présente un bus (C) disposé entre les convertisseurs continu-continu par lequel s'effectue la communication entre le convertisseur continu-continu (W2) exerçant la fonction de maître et les convertisseurs continu-continu (W2) travaillant comme sources de courant.

11. Dispositif selon la revendication 10,
**caractérisé en ce que**
le bus est un bus CAN.

12. Dispositif selon l'une quelconque des revendications 7-11,
**caractérisé en ce qu'**
il présente une mémoire (S) pour mémoriser la valeur limite de courant.

13. Dispositif selon la revendication 12,
**caractérisé en ce que**
la mémoire (S) est disposée dans le convertisseur continu-continu (W2) en mode régulation de tension.
